# EUROPEAN PATENT APPLICATION

(11) **EP 4 520 878 A1**
(43) Date of publication of application: **12.03.2025**
(21) Application number: 24192500.7
(22) Date of filing: 02.08.2024
(51) Int. Cl.: E02F 9/26

(54) **WORK MACHINE CONTROL METHOD, WORK MACHINE CONTROL PROGRAM, WORK MACHINE CONTROL SYSTEM, AND WORK MACHINE**

(30) Priority: 08.08.2023 JP 2023128957
(71) Applicant: Yanmar Holdings Co., Ltd., Osaka-shi, Osaka (JP)
(72) Inventor: SUGA, Ryosuke, Fukuoka (JP); KAWAGUCHI, Daisuke, Fukuoka (JP); TANAKA, Katashi, Fukuoka (JP)
(74) Representative: Dennemeyer & Associates S.A.

(57) **Abstract**

[Problem] A work machine control method, a work machine control program, a work machine control system, and a work machine which easily improve operability are provided.

[Solution] A work machine control method includes acquiring operation information on an operation of an operation section of a display device for a work machine, displaying an operation menu M1 in a position corresponding to the operation section on the display screen Dpi displayed in a display section of the display device, executing control based on the operation information, and switching a display mode of the operation menu M1 from a normal mode to a specific mode on the display screen Dpi when a switching condition is satisfied.

## Description

### TECHNICAL FIELD

The present disclosure relates to a work machine control method, a work machine control program, a work machine control system that are used for a work machine, and the work machine.

### BACKGROUND ART

As a related art, a technique of displaying various information of a work machine in a display device installed in the work machine (construction machine) is known (for example, refer to Patent Document 1). The display device according to the related art displays at least information on a fuel amount and information on an engine water temperature when the work machine is in operation. Furthermore, according to the related art, display of a guide index for guiding a function of a display changeover switch may be deleted.

### PRIOR ART DOCUMENT

### PATENT DOCUMENT

Patent Document 1: Japanese Unexamined Patent Application Publication No. 2013-104236

### SUMMARY OF INVENTION

### TECHNICAL PROBLEM

In the configuration of the related art, when the display device is miniaturized due to miniaturization of the work machine, a display size of the guide index may be reduced, and therefore, operability of the display device may be degraded.

An object of the present disclosure is to provide a work machine control method, a work machine control program, a work machine control system, and a work machine capable of improving operability.

### SOLUTION TO PROBLEM

A work machine control method according to an aspect of the present invention includes acquiring operation information on an operation of an operation section of a display device for a work machine, displaying an operation menu in a position corresponding to the operation section on the display screen displayed in a display section of the display device, executing control based on the operation information, and switching a display mode of the operation menu from a normal mode to a specific mode on the display screen when a switching condition is satisfied.

A work machine control program according to another aspect of the present invention is a program for causing one or more processors to perform the work machine control method.

A work machine control system according to a further aspect of the present invention includes an acquisition processor, a display processor, and a control processor. The acquisition processor acquires operation information relating to an operation performed on the operation section of the display device for the work machine. The display processor displays an operation menu in a position corresponding to the operation section on a display screen displayed in the display section of the display device. The control processor executes control based on the operation information. The display processor switches a display mode of the operation menu from a normal mode to a specific mode on the display screen, when a switching condition is satisfied.

A work machine according to an aspect of the present invention includes the work machine control system, and a machine body on which the display device is mounted.

### ADVANTAGEOUS EFFECTS OF INVENTION

According to the present invention, the work machine control method, the work machine control program, the work machine control system, and the work machine, each of which easily improves operability, can be provided.

### BRIEF DESCRIPTION OF DRAWINGS

FIG. 1 is a perspective view schematically illustrating an overall configuration of a work machine according to a first embodiment.
FIG. 2 is a diagram schematically illustrating a hydraulic circuit and the like of the work machine according to the first embodiment.
FIG. 3 is a plan view schematically illustrating a monitoring area and the like set around the work machine according to the first embodiment viewed from above the work machine.
FIG. 4 is an external view schematically illustrating a display device displaying a display screen by a work machine control system according to the first embodiment.
FIG. 5 is a diagram illustrating an example of the display screen displayed by the work machine control system according to the first embodiment.
FIG. 6 is a diagram illustrating an example of the display screen displayed by the work machine control system according to the first embodiment.
FIG. 7 is a diagram illustrating an example of switching of the display screen displayed by the work machine control system according to the first embodiment.
FIG. 8 is a flowchart illustrating an example of processing according to a control method employed in the work machine control system according to the first embodiment.
FIG. 9 is a diagram schematically illustrating a modification of a display mode of an operation menu.

### DESCRIPTION OF EMBODIMENTS

Embodiments of the present disclosure will be described hereinafter with reference to the accompanying drawings. The following embodiments are examples that embody the present invention, and do not intend to limit the technical scope of the present invention.

### First Embodiment

### 1. Overall configuration

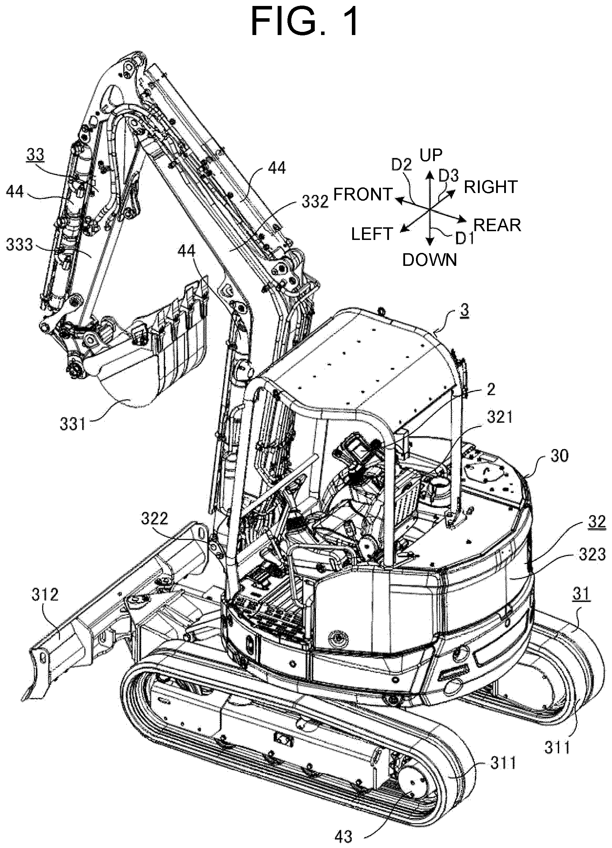

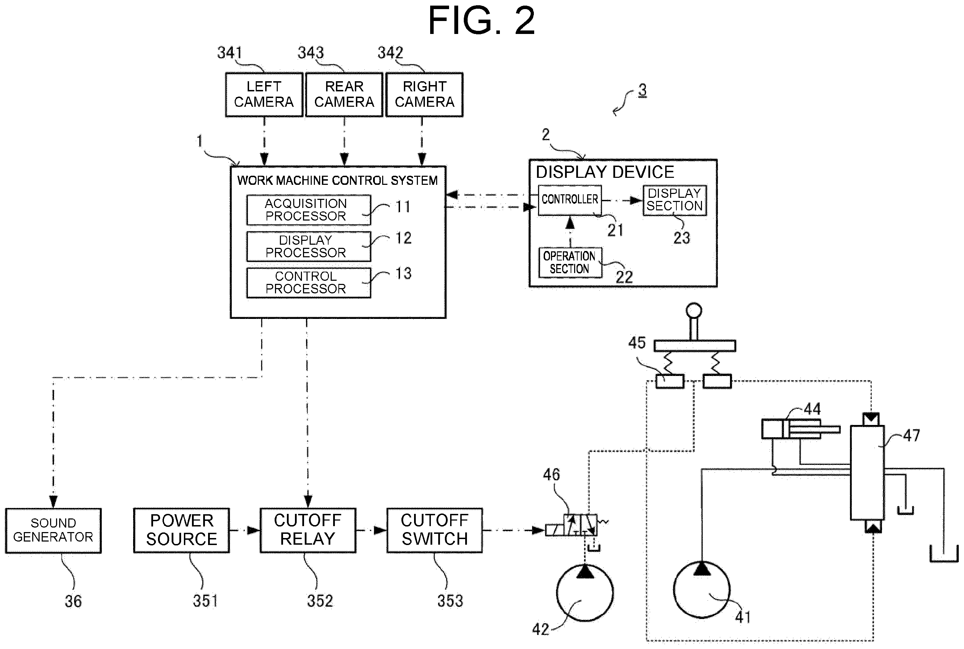

As illustrated in FIG. 1, a work machine 3 in this embodiment includes a machine body 30 having a traveling section 31, a swivel section 32, and a work section 33. Furthermore, as illustrated in FIG. 2, the work machine 3 further includes a work machine control system 1 (hereinafter, also simply referred to as a "control system 1"). In addition, the machine body 30 further includes a display device 2 and an operation device.

The term "work machine" as used in the present disclosure refers to various machines used to perform work, and refers to, for example, a work vehicle, such as a backhoe (including a hydraulic excavator, a mini excavator, etc.), a wheel loader, or a carrier. The work machine 3 includes the work section 33 configured to perform at least one task including a lifting task. The work machine 3 is not limited to a "vehicle" but may be, for example, a work vessel or a flying work body, such as a drone or a multicopter. Furthermore, the work machine 3 is not limited to a construction machine (construction equipment), but may also be an agricultural machine (agricultural equipment), such as a rice transplanter, a tractor, or a combine harvester. In this embodiment, unless otherwise specified, a case where the work machine 3 is a backhoe with a lifting function (with a crane function) and can perform excavation work, ground leveling work, trenching work, or loading work as well as lifting work is taken as an example.

For convenience of explanation, a vertical direction in a state in which the work machine 3 is usable is defined as an up-down direction D1 in this embodiment. Furthermore, a front-rear direction D2 and a right-left direction D3 are defined based on a direction viewed from a user (an operator) seated on (a driving section 321 of) the work machine 3 in a non-swiveling state of the swivel section 32. In other words, each of the directions used in this embodiment is defined with the machine body 30 of the work machine 3 being the reference. A movement direction of the machine body 30 during forward travel of the work machine 3 is defined as "front", and a movement direction of the machine body 30 during reverse travel of the work machine 3 is defined as "rear". Similarly, a direction in which a front end portion of the machine body 30 moves when the work machine 3 swivel to the right is referred to as a "right side", and a direction in which the front end portion of the machine body 30 moves when the work machine 3 swivel to the left is referred to as a "left side". However, these directions are not intended to limit a use direction (a direction in use) of the work machine 3.

The work machine 3 includes an engine that serves as a power source.

In the work machine 3, for example, a hydraulic pump 41 (refer to FIG. 2) is driven by the engine, and hydraulic oil is supplied from the hydraulic pump 41 to hydraulic actuators (including hydraulic motors 43, a hydraulic cylinder 44, etc.) of the components of the machine body 30 to drive the machine body 30. Furthermore, the work machine 3 is controlled, for example, by the user (operator), who is seated in the driving section 321 of the machine body 30, operating an operation lever and the like of an operation device.

In this embodiment, it is assumed that the work machine 3 is the riding type backhoe as described above, and therefore, the work section 33 is driven in accordance with an operation performed by the user (operator) seated in the driving section 321, thereby to perform work, such as excavation. The driving section 321 in which the user is seated is provided at the swivel section 32.

The traveling section 31 has a traveling function and is capable of traveling on the ground (also swiveling). The traveling section 31 includes, for example, a pair of right and left crawlers 311 and a blade 312. The traveling section 31 further includes, for example, the hydraulic motors 43 (hydraulic actuators) for traveling, in order to drive the crawlers 311.

The swivel section 32 is disposed on the traveling section 31 and is capable of swiveling, relative to the traveling section 31, about a rotation shaft extending in the vertical direction. The swivel section 32 has a hydraulic motor (a hydraulic actuator) and other components for swiveling. The swivel section 32 includes, in addition to the driving section 321, the engine and the hydraulic pump 41. Moreover, a boom bracket 322 to which the work section 33 is attached is disposed at a front end portion of the swivel section 32.

The work section 33 is capable of performing work, including lifting work. The work section 33 is supported by the boom bracket 322 of the swivel section 32 and performs the work. The work section 33 includes a bucket 331, a boom 332, and an arm 333. The work section 33 further includes hydraulic actuators (including the hydraulic cylinder 44 and a hydraulic motor) for driving the sections.

The bucket 331 is a type of attachment (work tool) that can be attached to the machine body 30 of the work machine 3, and is constituted by optional tools selected, in accordance with contents of work, from a plurality of types of attachment. As an example, the bucket 331 is detachably attached to the machine body 30 and replaced according to content of work. In addition to the bucket 331, attachments for the work machine 3 include various implements, such as a breaker, an auger, a crusher, a fork, a fork claw, a steel cutter, an asphalt cutter, a mower, a ripper, a mulcher, a tilt rotator, and a tamper. The work section 33 performs work by driving the bucket 331 with power supplied from a drive device.

The boom 332 is supported by the boom bracket 322 of the swivel section 32 in a rotatable manner. Specifically, the boom 332 is supported at the boom bracket 322 in a rotatable manner about a rotation shaft extending in a horizontal direction. The boom 332 has a shape that extends upward from a base end portion supported by the boom bracket 322. The arm 333 is coupled to a tip end of the boom 332. The arm 333 is supported by the boom 332 to be rotatable around a rotation shaft extending in the horizontal direction. The bucket 331 is attached to a tip end of the arm 333.

The work section 33 moves when receiving power from the engine serving as a power source. Specifically, the engine drives the hydraulic pump 41 which supplies hydraulic oil to the hydraulic actuators (including the hydraulic cylinders 44) of the work section 33 so that the sections (bucket 331, boom 332, and arm 333) in the work section 33 moves.

In particular, in this embodiment, the work section 33 has an articulated structure in which the boom 332 and the arm 333 are individually rotatable. That is, the boom 332 and the arm 333 rotate about the respective rotation shafts extending in the horizontal direction so that the articulated work section 33 including the boom 332 and the arm 333 is capable of performing extending and folding movements as a whole.

Each of the traveling section 31 and the swivel section 32 also moves when receiving the power from the engine serving as the power source, similarly to the work section 33. That is, the hydraulic oil is supplied from the hydraulic pump 41 to the hydraulic motors 43 of the traveling section 31, the hydraulic motor of the swivel section 32, and the like to cause the swivel section 32 and the traveling section 31 to move.

As described above, the engine functions as the power source that supplies power to the components. The engine is mounted together with the hydraulic pump 41 and the like in the swivel section 32. In this embodiment, as an example, the engine is a diesel engine. The engine is driven by fuel (light oil in this case) supplied from a fuel tank.

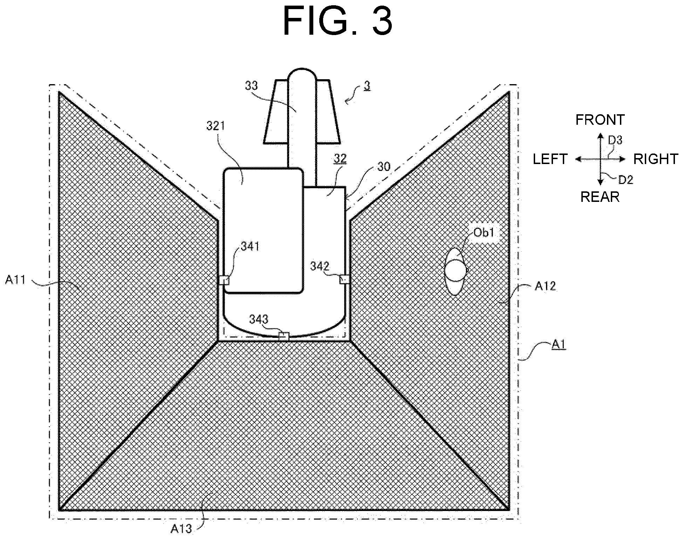

The machine body 30 includes various types of sensor (including a camera) that detect a detection target Ob1 (refer to FIG. 3) in a monitoring area A1 (refer to FIG. 3) surrounding the work machine 3, such as a camera that photographs an area surrounding the machine body 30. As an example, as illustrated in FIG. 3, a plurality of cameras (in this example, three cameras), including a left camera 341, a right camera 342, and a rear camera 343, are mounted on the swivel section 32 of the machine body 30. The left camera 341, the right camera 342, and the rear camera 343 are connected to the control system 1 and output, to the control system 1, images captured by the individual cameras. FIG. 3 is a plan view of the work machine 3 viewed from above schematically illustrating the monitoring area A1 set around the work machine 3, the detection target Ob1, and the machine body 30 of the work machine 3 (including the left camera 341, the right camera 342, and the rear camera 343).

The left camera 341, the right camera 342, and the rear camera 343 are installed to face leftward, rightward, and rearward, respectively, with respect to the driving section 321 so as to capture images of a left side, a right side, and a rear side in the monitoring area A1 from the viewpoint of the operator seated in the driving section 321 of the swivel section 32. In other words, as illustrated in FIG. 3, the monitoring area A1 includes a plurality of (herein, three) small areas A11, A12, and A13, and the left camera 341 captures an image of the small area A11 (left area) which is on the left as seen from the operator seated in the driving section 321. Similarly, the right camera 342 captures an image of the small area A12 (right area) which is on the right as seen from the operator seated in the driving section 321, and the rear camera 343 captures an image of the small area A13 (rear area) which is at the rear as seen from the operator seated in the driving section 321. This enables the left camera 341, the right camera 342, and the rear camera 343 to cover the both sides (left and right) and the rear side which are often blind spots for the operator.

In FIG. 2, a hydraulic circuit and an electric circuit (electric connections) of the work machine 3 according to this embodiment are schematically illustrated. In FIG. 2, solid lines indicate high-pressure oil paths (for hydraulic oil), dotted lines indicate low-pressure oil paths (for pilot oil), and dashed-dotted lines indicate electric signal paths.

As illustrated in FIG. 2, the work machine 3 includes a pilot pump 42, a remote control valve 45, a control valve 46, and a direction switching valve (control valve) 47, in addition to the hydraulic pump 41, the hydraulic motors 43 (omitted in FIG. 2), and the hydraulic cylinder 44.

The hydraulic oil is supplied from the hydraulic pump 41 driven by the engine to the hydraulic motors 43 of the traveling section 31, the hydraulic motor of the swivel section 32, the hydraulic cylinder 44 of the work section 33, and the like. In this way, the hydraulic actuators, such as the hydraulic motors 43 and the hydraulic cylinder 44, are driven.

For each of the hydraulic actuators, such as the hydraulic motors 43 and the hydraulic cylinder 44, the pilot-type direction switching valve 47 capable of changing a direction and a flow rate of the hydraulic oil supplied from the hydraulic pump 41 is disposed. The direction switching valve 47 is driven when pilot oil is supplied from the pilot pump 42 as an input instruction.

Here, the remote control valve 45 is disposed in a supply path of the pilot oil to the direction switching valve 47 corresponding to the hydraulic cylinder 44 of the work section 33. The remote control valve 45 outputs a work operation instruction for the work section 33 in response to an operation of the operation lever. The work operation instruction instructs an expanding movement, a contracting movement, and the like of the work section 33. Furthermore, the electromagnetic control valve 46 (solenoid valve) is inserted between the remote control valve 45 and the pilot pump 42. The control valve 46 is connected via a cutoff relay 352 and a cutoff switch 353 to the power source 351 and operates in accordance with current supplied from the power source 351.

Similarly, a remote control valve is also disposed in a supply path of the pilot oil to a direction switch valve that corresponds to the hydraulic motor 43 of the traveling section 31. This remote control valve outputs a traveling operation instruction of the traveling section 31 in response to an operation of the operation lever. The traveling operation instruction instructs a traveling movement (for example, forward movement or backward movement) of the traveling section 31. Furthermore, a remote control valve is also disposed in a supply path of the pilot oil to a direction switching valve corresponding to the hydraulic motor of the swivel section 32. The remote control valve outputs a swivel operation instruction for the swivel section 32 in response to an operation of the operation lever. The swivel operation instruction instructs a swivel movement (for example, left swivel or right swivel) of the swivel section 32. The electromagnetic control valve 46 (solenoid valve) is also inserted between these remote control valves and the pilot pump 42. The control valve 46 is connected via the cutoff relay 352 and the cutoff switch 353 to the power source 351 and moves in accordance with current supplied from the power source 351.

The control valve 46 opens the flow path of the pilot oil from the pilot pump 42 to the remote control valve 45 while the control valve 46 is energized, that is, in a state in which current is supplied, and shuts off the flow path of the pilot oil while the control valve 46 is de-energized, that is, in a state in which supply current is blocked. Therefore, the hydraulic actuator corresponding to the remote control valve 45 becomes inoperable when the supply current to the control valve 46 is blocked, and output of the hydraulic actuator is forcibly stopped irrespective of an operation of the operation lever.

Here, the cutoff relay 352 is connected to the control system 1 and is switched between ON and OFF in response to a control signal (electric signal) supplied from the control system 1. The cutoff switch 353 is turned on or off in response to an operation of a cutoff lever (similar to a gate lock lever), that is, the cutoff switch 353 is turned on when the cutoff lever is operated downward. Therefore, when both the cutoff relay 352 and the cutoff switch 353 are in an ON state, the control valve 46 becomes energized and the flow path of the pilot oil from the pilot pump 42 to the remote control valve 45 is opened so that the hydraulic actuator is driven in response to an operation of the operation lever. On the other hand, when at least one of the cutoff relay 352 and the cutoff switch 353 is in an OFF state, the control valve 46 is de-energized and the flow path of the pilot oil is blocked so that the hydraulic actuator becomes inoperable.

For example, when at least one of the cutoff relay 352 and the cutoff switch 353 that are connected to the control valve 46 inserted between the remote control valve corresponding to the hydraulic motor of the swivel section 32 and the pilot pump 42 is in an OFF state, the hydraulic motor of the swivel section 32 becomes inoperable. In this state, output of the hydraulic actuator (hydraulic motor of swivel section 32) is forcibly stopped irrespective of an operation of the operation lever, and therefore, a swivel operation of the swivel section 32 is prohibited.

The control system 1 is mainly configured by a computer system having one or more processors, such as a Central Processing Unit (CPU), and one or more memories, such as a Read Only Memory (ROM) and a Random Access Memory (RAM), and executes various processes (information processing). In this embodiment, the control system 1 is an integrated controller that controls the entire work machine 3 and is configured by, for example, an Electronic Control Unit (ECU). However, the control system 1 may be disposed separately from the integrated controller. The control system 1 will be specifically described in "2. Configuration of Control System".

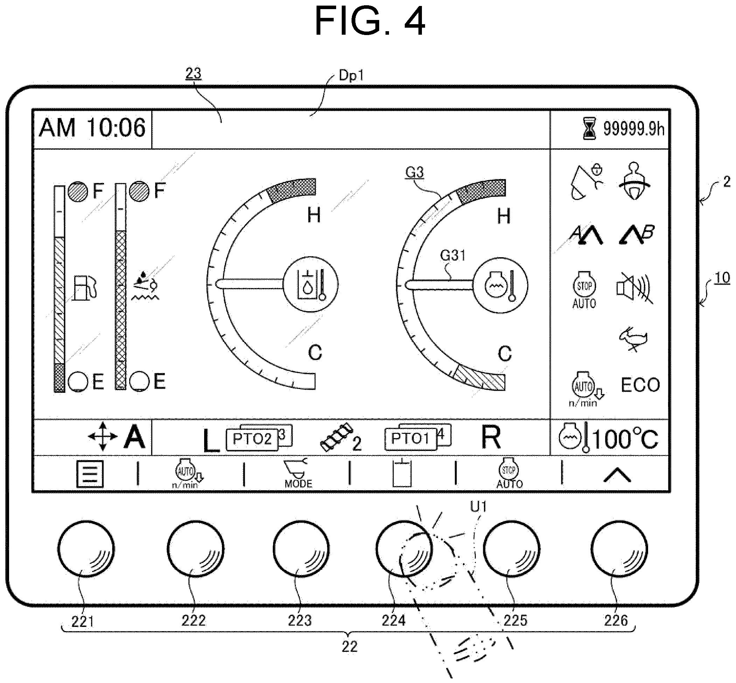

The display device 2 is disposed in the driving section 321 of the machine body 30, and is a user interface that accepts an operation input performed by the user (operator) and outputs various types of information for the user. The display device 2 accepts various operations performed by the user, for example, by outputting electric signals in response to the user operations. Accordingly, the user (operator) can view a display screen Dp1 (refer to FIG. 4) displayed on the display device 2, and also can operate the display device 2 where appropriate.

As illustrated in FIG. 2, the display device 2 includes a controller 21, an operation section 22, and a display section 23. The display device 2 is configured to be communicable with the control system 1 and can exchange data with the control system 1. In this embodiment, as an example, the display device 2 is a dedicated device used for the work machine 3.

The controller 21 controls the display device 2 in accordance with data supplied from the control system 1. Specifically, the controller 21 outputs an electric signal corresponding to an operation that is performed by the user and received by the operation section 22, and causes the display screen Dp1 generated by the control system 1 to be displayed on the display section 23.

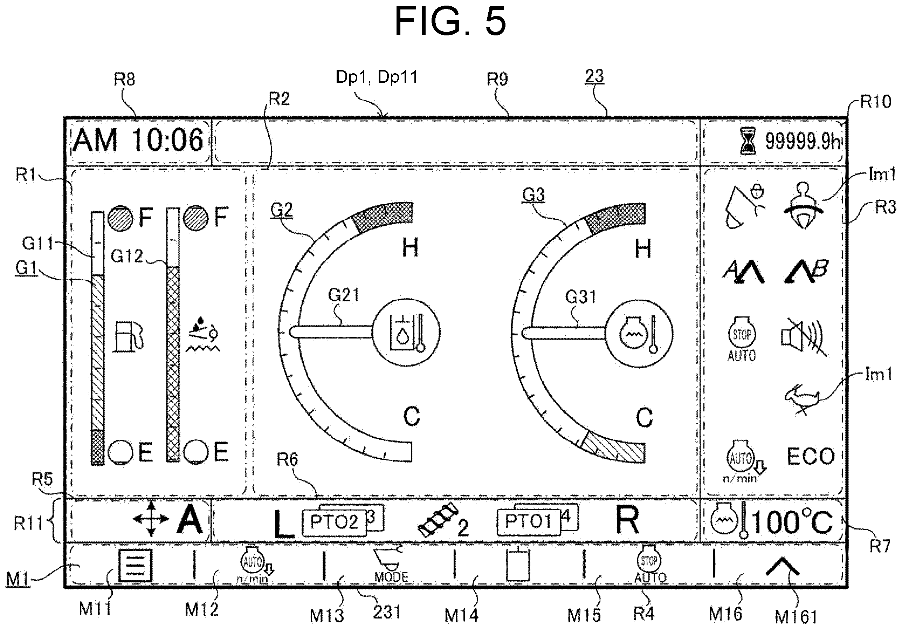

The operation section 22 is a user interface for accepting an operation input performed by the user (operator) to the display screen Dp1 displayed on the display section 23. For example, the operation section 22 outputs an electric signal corresponding to an operation performed by a user U1 (refer to FIG. 4) to receive various operations performed by the user U1. As an example, the operation section 22 includes a plurality of (six in this embodiment) mechanical push button switches 221 to 226 as illustrated in FIG. 4 in this embodiment. The plurality of push button switches 221 to 226 are disposed in the vicinity of a display region of the display section 23 along a periphery of the display region (a lower portion in the example in FIG. 4). The plurality of push button switches 221 to 226 are associated with items M11 to M16 (refer to FIG. 5) displayed on the display screen Dp1, which will be described below, and when one of the plurality of push button switches 221 to 226 is operated, a corresponding one of the items M11 to M16 on the display screen Dp1 is operated (selected).

Moreover, the operation section 22 may include a touch panel and an operation dial. In such a case as well, one of the items on the display screen Dp1 is operated (selected) in accordance with an operation performed on the operation section 22.

The display section 23 is a user interface for presenting information to the user U1 (operator), such as a liquid crystal display or an organic EL display that displays various types of information. The display section 23 presents various types of information to the user by means of display. As an example, in this embodiment, the display section 23 is a full-color liquid crystal display with a backlight and has a "horizontally-long" display region that is long in a horizontal direction as illustrated in FIG. 4.

The display device 2 displays various types of information on the display screen Dp1 to the user U1 (operator) who operates the work machine 3. That is, the user U1 who operates the work machine 3 can visually obtain various types of information relating to the work machine 3 by viewing the display screen Dp1 displayed on the display device 2. As an example, the display device 2 displays information on a running state of the work machine 3, such as a cooling water temperature and a hydraulic oil temperature, so that the user U1 can check, at the display device 2, the information that is required for operating the work machine 3 and that is on the running state of the work machine 3. The display device 2 can also display on the display screen Dp1 images of regions around the work machine 3 (images in the monitoring area A1) captured by the left camera 341, the right camera 342, and the rear camera 343. In this way, when operating the work machine 3, the user U1 (operator) can check, on the display screen Dp1 displayed on the display device 2, situations, for example, on sides and the rear of the work machine 3, where there are likely to be blind spots from the driving section 321.

The work machine 3 further includes a sound generator 36 (refer to FIG. 2) that outputs sound (including voice) to the user U1 (operator). The sound generator 36 includes a buzzer or a speaker and outputs sound upon receiving an electric signal. The sound generator 36 is connected to the control system 1 and outputs sounds, such as beeps or voice, in response to a sound control signal supplied from the control system 1. In this embodiment, the sound generator 36, as well as the display device 2, is disposed in the driving section 321 of the machine body 30. The sound generator 36 may be disposed integrally with the display device 2.

In addition to the components describe above, the machine body 30 further includes the operation lever, the cutoff lever, a communication terminal, the fuel tank, and a battery. The machine body 30 further includes sensors for monitoring a running state of the machine body 30, such as a cooling water temperature sensor, a hydraulic oil temperature sensor, a tachometer that measures an engine speed, and an hour meter that measures a running time. The machine body 30 still further includes other sensors that detect states of the cutoff lever, a starter key switch, and the like.

### 2. Configuration of Control System

Next, a configuration of the control system 1 according to this embodiment will be described with reference to FIG. 2. The control system 1 controls the display device 2 to cause the display device 2 to display the display screen Dp1. In this embodiment, the display device 2 is mounted on the machine body 30 of the work machine 3 as described above. The control system 1 is a component of the work machine 3 and constitutes the work machine 3 with the machine body 30 and the other components. In other words, the work machine 3 in this embodiment includes at least the control system 1 and the machine body 30 (including the traveling section 31, the swivel section 32, and the work section 33) on which the display device 2 is mounted.

The term "screen" as in the display screen Dp1 used in the present disclosure refers to a video (image) displayed on the display device 2, and includes an icon, a figure, a photograph, text, and a moving image. That is, the control system 1 can display, on the display device 2, the display screen Dp1 including an icon representing information on the running state of the work machine 3, such as the cooling water temperature and the hydraulic oil temperature, for example. Here, when the display screen Dp1 includes a moving image or the like, the display screen Dp1 does not include a constant image but includes an image that changes from moment to moment.

As illustrated in FIG. 2, the control system 1 includes an acquisition processor 11, a display processor 12, and a control processor 13. In this embodiment, as an example, the control system 1 is mainly constituted by a computer system having at least one processor, and therefore, the plurality of functional sections (including acquisition processor 11, display processor 12, and control processor 13) are realized when at least one processor executes a work machine control program. The plurality of functional sections included in the control system 1 may be distributed to a plurality of housings or may be included in a single housing.

The control system 1 is configured to be communicable with the devices provided in the individual sections of the machine body 30. In other words, at least the display device 2, the sound generator 36, the cutoff relay 352, the left camera 341, the right camera 342, and the rear camera 343 are connected to the control system 1. Accordingly, the control system 1 can control the display device 2, the sound generator 36, and the like, controls the cutoff relay 352 to control the control valve 46, and obtain captured images of the left camera 341, the right camera 342, the rear camera 343, and the like. Here, the control system 1 may directly exchange various types of information (data) with each of the devices or may indirectly perform exchange via a relay or the like.

The acquisition processor 11 executes acquisition processing of acquiring operation information relating to operations of the operation section 22 of the display device 2, and sensor information relating to detection results of the sensors (including the left camera 341, the right camera 342, and the rear camera 343) for monitoring a running state of the machine body 30. That is, the control system 1 accepts various operations for controlling the work machine 3 by the acquisition processor 11 and accepts outputs of the sensors for monitoring the running state of the machine body 30, such as a fuel remaining amount gauge.

Specifically, the operation section 22 of the display device 2 outputs an operation signal corresponding to an operation performed by the user U1, and the acquisition processor 11 acquires the operation signal. Furthermore, the acquisition processor 11 acquires sensor signals from the sensors that monitor the running state of the machine body 30, such as the cooling water temperature sensor, the hydraulic oil temperature sensor, the tachometer that measures an engine speed, a speedometer that measures a traveling speed, and an hour meter that measures a running time. The data acquired by the acquisition processor 11 is stored in a memory or the like, for example.

The display processor 12 executes at least a display process of displaying the display screen Dp1 on the display device 2 as illustrated in FIG. 5. Specifically, the display processor 12 generates the display screen Dp1 based on the data acquired by the acquisition processor 11 and the like and controls the display device 2 so as to display the display screen Dp1 on the display section 23 of the display device 2.

The control processor 13 executes the control based on the operation information. Specifically, the control processor 13 performs control based on the operation information relating to an operation performed on the operation section 22 of the display device 2 acquired by the acquisition processor 11. The term "control" includes various types of control based on the operation information, such as control (including settings) of the sections (including traveling section 31, swivel section 32, and work section 33) of the machine body 30 and control of the display processor 12. Therefore, the control processor 13 can control the display processor 12 so as to change the display screen Dp1 displayed on the display section 23 of the display device 2 in accordance with an operation performed on the operation section 22.

### 3. Work Machine Control Method

Hereinafter, an example of a method for controlling the work machine 3 that is mainly performed by the control system 1 (hereinafter simply referred to as a "control method") will be described with reference to FIGS. 5 to 8.

The control method according to this embodiment is executed by the control system 1 mainly configured by a computer system, and in other words, the control method is embodied by the work machine control program (hereinafter, simply referred to as a "control program"). That is, the control program according to this embodiment is a computer program for causing one or more processors to execute processes relating to the control method. Such a control program may be executed by the control system 1 and the display device 2 in cooperation with each other, for example.

Here, the control system 1 executes various processes described below relating to the control method, when a specific start operation set in advance to execute the control program is performed. Examples of the start operation include an operation of activating the engine of the work machine 3. Meanwhile, when a preset specific termination operation is performed, the control system 1 terminates the various processes below relating to the control method. Examples of the termination operation include an operation of stopping the engine of the work machine 3.

### 3.1 Display Screen

First, a basic configuration of the display screen Dp1 displayed on the display section 23 of the display device 2 in accordance with the control method according to this embodiment will be described. In the drawings illustrating the display screen Dp1 displayed on the display section 23 of the display device 2, such as FIG. 5, dashed-dotted lines, leading lines, and reference numerals representing regions are merely for illustrative purposes and are not actually displayed on the display device 2.

The display screen Dp1 illustrated in FIG. 5 is a home screen displayed first in accordance with the control method. The home screen is the basic display screen Dp1 that is first displayed on the display device 2 during running of the work machine 3. In accordance with an operation performed on the operation section 22, the display screen Dp1 can shift from the home screen to various display screens Dp 1 including a menu screen and a setting screen.

As illustrated in FIG. 5, the display screen Dp1 serving as the home screen includes a first region R1, a second region R2, a third region R3, a fourth region R4, a fifth region R5, a sixth region R6, a seventh region R7, an eighth region R8, a ninth region R9, and a tenth region R10. The fifth region R5, the sixth region R6, and the seventh region R7 are examples of a notification region R11.

Specifically, the display screen Dp1 serving as the home screen is divided into four regions in a vertical direction (up-down direction). Then, the upper three regions are further divided into three regions in a lateral direction (left-right direction). Accordingly, the display screen Dp1 serving as the home screen is divided into ten regions in total. The regions in a second row from the top serve as the first region R1, the second region R2, and the third region R3 in order from left to right. The region in a lowermost row serves as the fourth region R4. Furthermore, the regions in a third row from the top serve as the fifth region R5, the sixth region R6, and the seventh region R7 in order from left to right, and the regions in an uppermost row serve as the eighth region R8, the ninth region R9, and the tenth region R10 in order from left to right. Of the four regions which are divided in the vertical direction, the region in the second row from the top (including the first region R1, the second region R2, and the third region R3) has a largest vertical size. Of the three regions which is divided in the lateral direction, a middle region (including the second region R2, the sixth region R6, and the ninth region R9) has a largest lateral size.

However, the arrangement and the sizes of the regions are merely examples, and may be changed as appropriate. The individual regions may not be clearly divided by boundary lines. For example, even in the example in FIG. 5, although the second and third regions R2 and R3 are clearly divided by a boundary line, there is no boundary line between the first and second regions R1 and R2. Obviously, the first region R1 and the second region R2 may be clearly divided by a boundary line.

The first region R1 is a rectangular region extending in the vertical direction. In the first region R1, remaining amount information G1 relating to a remaining amount of a monitoring target is displayed. Here, the monitoring target is an object (including liquid and gas) that is consumed with running of the work machine 3. In this embodiment, it is assumed that the engine of the work machine 3 includes a urea Selective Catalytic Reduction (SCR) system. The urea SCR system removes NOx included in an exhaust gas by spraying urea solution toward the exhaust gas. In the work machine 3 configured as described above, not only fuel but also urea solution in a urea solution tank are required to be appropriately supplied. Examples of the monitoring target include fuel of the engine (light oil, for example) and urea solution in this embodiment. Therefore, the remaining amount information G1 displayed on the first region R1 includes fuel remaining amount information G11 about a remaining amount of fuel and urea solution remaining amount information G12 about a remaining amount of urea solution. Based on an output (sensor signal) of a remaining amount sensor acquired by the acquisition processor 11, the display processor 12 generates the remaining amount information G1 in the display screen Dp1.

In this embodiment, both of the fuel remaining amount information G11 and the urea solution remaining amount information G12 are represented by bar graphs. That is, the remaining amount information G1 is obtained by indexation of a remaining amount of the monitoring target (in this case, fuel and urea solution) and represented by a length (height) of a bar graph. According to the remaining amount information G1 represented by the graphs (bar graphs), there is a benefit that the remaining amount information G1 has good visibility for the user and the remaining amount of the monitoring target can be instinctively recognized by the user. It is sufficient that the remaining amount information G1 is about a remaining amount of the monitoring target. The remaining amount information G1 is not limited to information indicating a remaining amount itself by a numerical value, etc., and may be, for example, information indicating a remaining amount step-by-step by a pattern of icon, etc. and information indirectly indicating a remaining amount by indicating a consumed amount of the monitoring target, etc.

The second region R2 is a rectangular region extending in the horizontal direction. The second region R2 displays information on a running state of the work machine 3. In the example of FIG. 5, in the second region R2, cooling water temperature information G3 and hydraulic oil temperature information G2 are displayed. The cooling water temperature information G3 and the hydraulic oil temperature information G2 are examples of information relating to the running state the work machine 3.

The display processor 12 generates the cooling water temperature information G3 in the display screen Dp1 based on the output (sensor signal) of the cooling water temperature sensor acquired by the acquisition processor 11. Similarly, the display processor 12 generates the hydraulic oil temperature information G2 in the display screen Dp1 based on the output (sensor signal) of the hydraulic oil temperature sensor acquired by the acquisition processor 11.

In this embodiment, the cooling water temperature information G3 and the hydraulic oil temperature information G2 are individually displayed as the graphs that simulate analog meters. In the analog meters, needles G21 and G31 turn and values are indicated by positions of the needles G21 and G31. That is, the cooling water temperature information G3 is obtained by indexation of a cooling water temperature included in the running state of the work machine 3 and represented by a position of the needle G31 of the graph. Similarly, the hydraulic oil temperature information G2 is obtained by indexation of a hydraulic oil temperature included in the running state of the work machine 3 and represented by a position of the needle G21 of the graph. According to the cooling water temperature information G3 and the hydraulic oil temperature information G2 represented by the graphs, there is a benefit that the cooling water temperature information G3 and the hydraulic oil temperature information G2 have good visibility for the user and the running state of the work machine 3 can be instinctively recognized by a user. The cooling water temperature information G3 and the hydraulic oil temperature information G2 are not limited to information indicating the cooling water temperature and the hydraulic oil temperature by values, etc., and may be, for example, information, etc. indicating the cooling water temperature and the hydraulic oil temperature step-by-step by a pattern of an icon, etc.

Furthermore, the information displayed in the second region R2 may be changed where appropriate. For example, a periphery image or the like captured by the left camera 341, the right camera 342, the rear camera 343, and the like may be displayed in the second region R2.

The third region R3 is a rectangular region extending in the vertical direction. In the third region R3, icons Im1 that correspond to running states of the components of the work machine 3 are displayed. In the third region R3, the plurality of icons Im1 may be displayed, and each of the icons Im1 uses a design (pattern) to indicate, for example, a state of a seatbelt, a cooling water temperature, a hydraulic oil temperature, or the like. Here, each of the icons Im1 indicates a running state, for example, using a display mode, such as a displayed color or a size. The display processor 12 determines states of the sections of the work machine 3 using outputs of the various sensors (including the cooling water temperature sensor and the hydraulic oil temperature sensor) that detect the running states of the sections of the work machine 3. When an abnormal value is detected in one of the components of the work machine 3, for example, the display processor 12 changes a display mode, such as the displayed color of the icon Im1 for the component to perform a warning display.

The fourth region R4 is a band-shaped region extending over an entire width of the display screen Dp1. In the fourth region R4, an operation menu M1 for operations performed on the display screen Dp1 is displayed. Here, as illustrated in FIG. 5, the operation menu M1 is displayed at a lower end portion of the display screen Dp1 along a lower edge 231 of the display region of the display section 23. The operation menu M1 is a band-shaped (rectangular) object having a length in the lateral direction (left-right direction) of the display screen Dp1. In the example of FIG. 5, the operation menu M1 has a width of approximately 10% of the entire display screen Dp1 in the vertical direction (up-down direction).

The operation menu M1 displayed along the lower edge 231 of the display region of the display section 23 as above is displayed at a position corresponding to the operation section 22 (refer to FIG. 4) in the display screen Dp1. That is, while the plurality of push button switches 221 to 226 in the operation section 22 are disposed adjacent to the lower edge 231 of the display region of the display section 23, the operation menu M1 arranged along the lower edge 231 of the display region of the display section 23 in the display screen Dp1 is displayed adjacent to the operation section 22.

The operation menu M1 includes a plurality of (six in this embodiment) items M11 to M16 for operations to be performed on the display screen Dp1. The plurality of items M11 to M16 are arranged in a longitudinal direction of the operation menu M1 (the lateral direction of the display screen Dp1).

The six items M11 to M16 are associated with the respective six push button switches 221 to 226 of the operation section 22 located beneath the six items M11 to M16 (refer to FIG. 4). For example, the item M11 of "MENU" is associated with the push button switch 221. Similarly, the item M12 is associated with the push button switch 222, the item M13 is associated with the push button switch 223, and the item M14 is associated with the push button switch 224, the item M15 is associated with the push button switch 225, and the item M16 is associated with the push button switch 226. Therefore, when the push button switch 221 corresponding to the item M11 of "MENU" is operated by the user U1 in a state in which the operation menu M1 is displayed, the item M11 of "MENU" is operated (selected).

For example, when the item M11 of "MENU" is operated (selected), the control processor 13 causes the display processor 12 to switch the screen illustrated in FIG. 5 to a menu screen as the display screen Dp1. The menu screen may be further switched to one of various setting screens as the display screen Dp1.

Furthermore, in the fourth region R4, one of the items M11 to M16 may be highlighted to also respond to an operation of an operation dial (or cursor key) of the operation section 22, or the like. For example, the item M11 to M16 are highlighted in a switching manner by an operation performed on the operation dial (or cursor key) or the like. The user U1 can select a desired one of the items M11 to M16 by operating a determination button in a state in which the desired one of the items M11 to M16 is highlighted. Therefore, for example, when the determination button is operated in a state in which the item M11 of "MENU" is highlighted, the item M11 of "MENU" is operated (selected). Furthermore, when the operation section 22 includes a touch panel, the user U1 can perform an operation of touching a desired one of the items M11 to M16 on the display screen Dp1 to select the desired one of the items M11 to M16.

In the fifth and sixth regions R5 and R6, for example, information on the work section 33 of the work machine 3 is displayed. In the seventh region R7, for example, information on a running state of the work machine 3, such as the cooling water temperature or the engine rotational speed of the work machine 3, is displayed. In the eighth region R8, for example, a current time is displayed. In the ninth region R9, for example, an error message or the like is displayed. In the tenth region R10, for example, information on a running time (hour meter) of the work machine 3 is displayed.

### 3.2 Operation Menu Display Mode

Next, a display mode of the operation menu M1 displayed on the display section 23 of the display device 2 will be described in detail with reference to FIGS. 5 to 7.

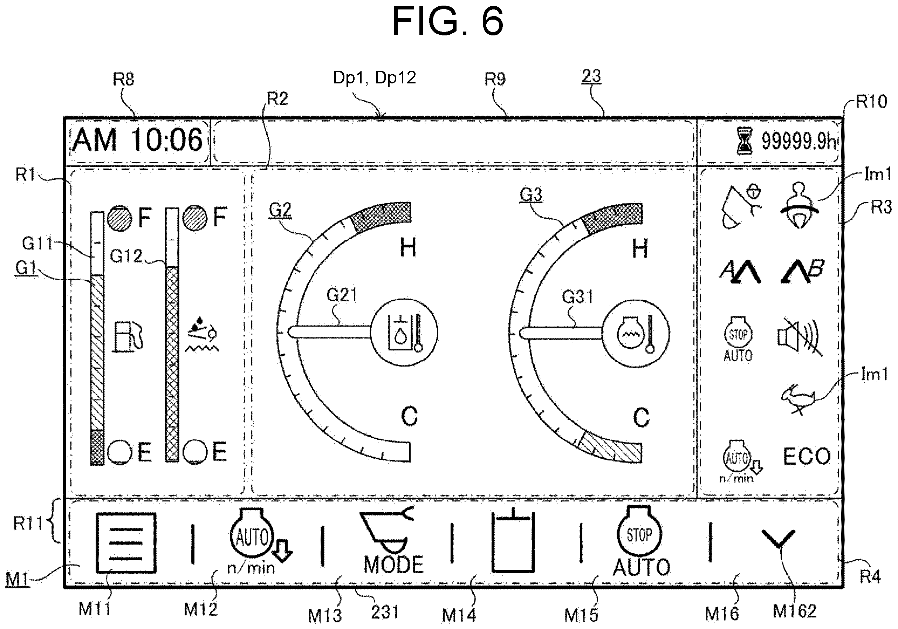

According to the control method of this embodiment, the display processor 12 switches a display mode of the operation menu M1 on the display screen Dp1 from a normal mode to a specific mode, when a switching condition is satisfied. The display screen Dp1 (first display screen Dp11) in which the display mode of the operation menu M1 is the "normal mode" is illustrated in FIG. 5, whereas the display screen Dp1 (second display screen Dp12) in which the display mode of the operation menu M1 is the "specific mode" is illustrated in FIG. 6. Specifically, when the switching condition is satisfied in a state in which the first display screen Dp 11 illustrated in FIG. 5 is displayed in the display section 23, the display screen Dp1 is switched to the second display screen Dp12 illustrated in FIG. 6.

With this configuration, a display mode of the operation menu M1 is not fixed on the display screen Dp1, and the display mode of the operation menu M1 may be switched from the normal mode to the specific mode where appropriate. Therefore, for example, the operability of the operation section 22 may be improved based on the operation menu M1 by displaying the operation menu M1 in a small size so as not to hinder the display of other information in the normal mode and displaying the operation menu M1 in an enlarged size in the specific mode. Accordingly, in this embodiment, even when the display device 2 is miniaturized due to miniaturization of the work machine 3, a method for controlling the work machine 3, a work machine control program, a work machine control program, the work machine control system 1, and the work machine 3, which easily improve operability, may be provided.

Specifically, in this embodiment, the operation section 22 includes the plurality of switches (push button switches 221 to 226), and the operation menu M1 includes the plurality of items M11 to M16 respectively corresponding to the plurality of switches (push button switches 221 to 226). The operation menu M1 having such a configuration may display the relationships between the plurality of switches (push button switches 221 to 226) and the respective operations for the user U1 on the display screen Dp1. Therefore, for example, the improvement of the visibility of the operation menu M1 by the enlarged display directly leads to the improvement of the operability of the operation section 22.

Here, the notification region R11 having a length in a direction in which the plurality of items M11 to M16 are arranged (lateral direction) displays a running information relating to a running state of the work machine 3 in the normal mode, and displays the operation menu M1 in the specific mode. Specifically, in the first display screen Dp 11 on which the operation menu M1 is displayed in the normal mode, as illustrated in FIG. 5, information on the work section 33 and information (running information) on the running state of the work machine 3, such as a cooling water temperature of the work machine 3, are displayed in the fifth to seventh regions R5 to R7 which are examples of the notification region R11 and which are arranged adjacent to the fourth region R4 on which the operation menu M1 is displayed. On the other hand, in the second display screen Dp 12 on which the operation menu M1 is displayed in the specific mode, as illustrated in FIG. 6, the fourth region R4 displaying the operation menu M1 extends upward to incorporate the notification region R11 so that the operation menu M1 is displayed over the notification region R11.

In this way, according to the control method of this embodiment, the operation menu M1 may be displayed using the notification region R11 in the specific mode in the limited display region of the display section 23. In this case, since the operation menu M1 is displayed, the running information in the notification region R11 is hidden by the operation menu M1. Therefore, the running information displayed in the fifth to seventh regions R5 to R7 which are hidden by the operation menu M1 preferably has a comparatively low emergency degree, such as information which less affects driving (operation) of the work machine 3.

Here, in the specific mode, a display size of the operation menu M1 is enlarged when at least compared with the normal mode. In this embodiment, in particular, the fourth region R4 which displays the operation menu M1 is extended upward when the normal mode is switched to the specific mode, and therefore, display sizes of the items M11 to M16 in the operation menu M1 are expanded in the vertical direction (up-down direction) of the display screen Dp1. In the example of FIG. 6, the display sizes of the icons, the text, and the like included in the individual items M11 to M16 are also enlarged when compared with the normal mode illustrated in FIG. 5. Consequently, since the display mode of the operation menu M1 is switched from the normal mode to the specific mode, the visibility of the operation menu M1 is improved and the operability of the operation section 22 is improved.

Here, the term "switching condition" in the present disclosure means a condition for switching the display mode of the operation menu M1 from the normal mode to the specific mode, and when the switching condition is satisfied, the display mode of the operation menu M1 is switched from the normal mode (refer to FIG. 5) to the specific mode (refer to FIG. 6).

The switching condition includes a specific operation performed on the operation section 22. In this embodiment, the switching condition is satisfied only when a specific operation is performed on the operation section 22 in a state in which the display mode of the operation menu M1 is the normal mode. Specifically, the user U1 can switch the display mode of the operation menu M1 from the normal mode to the specific mode by performing the specific operation on the operation section 22. By this, the user U1 may set the specific mode as the display mode of the operation menu M1.

Here, the operation section 22 includes a specific operator for operating the specific operation. The operation menu M1 includes a specific item displayed in a position corresponding to the specific operator on the display screen Dp1. In this embodiment, among the plurality of push button switches 221 to 226 in the operation section 22, the push button switch 226 located at a right end is an example of the specific operator. Therefore, among the plurality of items M11 to M16 in the operation menu M1, the item M16 located at the right end is an example of the specific item.

Accordingly, when the user U1 presses the push button switch 226 (specific operator) corresponding to the item M16, the switching condition is satisfied, and the display mode of the operation menu M1 is switched from the normal mode to the specific mode. By this, the user U1 can set the specific mode as the display mode of the operation menu M1 by operating the specific operator using the specific item (item M16) as a target.

Furthermore, according to this embodiment, when a cancel condition is satisfied, the display processor 12 switches the display mode of the operation menu M1 from the specific mode to the normal mode on the display screen Dp1. With this configuration, after the display mode of the operation menu M1 is switched from the normal mode to the specific mode, the display mode of the operation menu M1 may be returned to the normal mode.

Here, the term "cancel condition" in the present disclosure means a condition for switching the display mode of the operation menu M1 from the specific mode to the normal mode, and when the cancel condition is satisfied, the display mode of the operation menu M1 is switched from the specific mode to the normal mode. The cancel condition may be the same as or different from the switching condition.

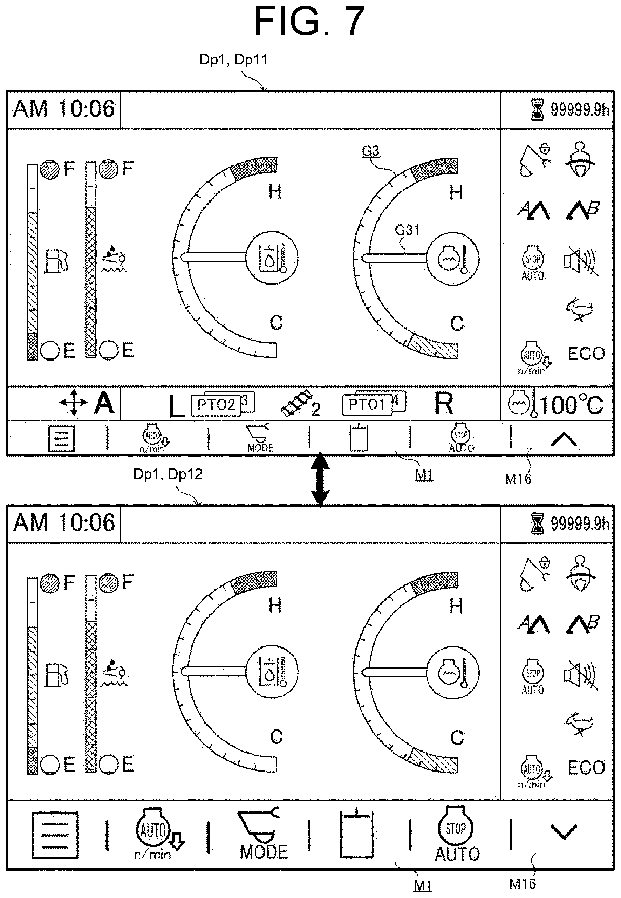

As with the switching condition, the cancel condition includes a specific operation performed on the operation section 22, for example, in this embodiment. In this embodiment, the cancel condition is satisfied only when a specific operation is performed on the operation section 22 in a state in which the display mode of the operation menu M1 is the specific mode. Specifically, every time the push button switch 226 (specific operator) corresponding to the item M16 (specific item) is pressed in a state in which the display screen Dp1 is displayed on the display section 23, the display mode of the operation menu M1 is alternately switched between the normal mode and the specific mode as illustrated in FIG. 7.

Furthermore, in this embodiment, the specific item includes a first icon M161 (refer to FIG. 5) in the normal mode and includes a second icon M162 (refer to FIG. 6) different from the first icon M161 in the specific mode. By this, the user U1 may recognize the normal mode or the specific mode of the display mode of the operation menu M1 depending on whether an icon included in the item M16 (specific item) is the first icon M161 or the second icon M162.

Here, the first icon M161 indicates an inside of the display screen Dp1 as illustrated in FIG. 5. On the other hand, the second icon M162 indicates an outside of the display screen Dp1 as illustrated in FIG. 6. In this embodiment, as an example, the first icon M161 and the second icon M162 are icons having an "arrow" shape pointing respective specific directions. Here, the item M16 (specific item) is positioned facing the lower edge 231 of the display region of the display section 23, and therefore, the first icon M161 has an arrow shape pointing an upper side which is an inner side of the display region, that is, a side opposite to the lower edge 231. The second icon M162 has an arrow shape pointing a lower side which is an outside of the display region, that is, pointing the lower edge 231.

Since the item M16 (specific item) includes the icon pointing the inside or the outside of the display screen Dp1 and the user operates the push button switch 226 (specific operator) corresponding to the item M16, the user can instinctively recognize the specific mode or the normal mode of the display mode of the operation menu M1 to be switched. Specifically, when the push button switch 226 (specific operator) is operated in a state in which the first icon M161 pointing the inside of the display screen Dp1 is displayed in the item M16 (specific item), the operation menu M1 is expanded toward the inside (upward) of the display screen Dp1, and the specific mode is entered. On the other hand, when the push button switch 226 (specific operator) is operated in a state in which the second icon M162 pointing the outside of the display screen Dp1 is displayed in the item M16 (specific item), a size of the operation menu M1 is reduced toward the outside (downward) of the display screen Dp1, and the normal mode is entered.

However, the icons included in the first icon M161 and the second icon M162 are not limited to the arrow-shaped icons as long as the icons point specific directions, and may be, for example, icons of a triangular shape or icons representing a human finger or the like.

### 3.3 Flowchart

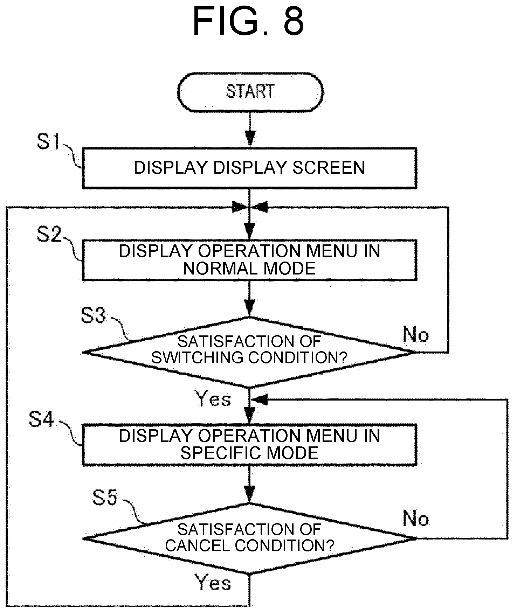

A processing flow executed by the display processor 12 in the control method will be described with reference to FIG. 8.

As illustrated in FIG. 8, the display processor 12 of the control system 1 displays the display screen Dp1 on the display device 2 (S1). At this time, as illustrated in FIG. 5, the display processor 12 displays the operation menu M1 in the normal mode (S2), and displays the first icon M161 in the item M16 (specific item).

In this state, the display processor 12 determines whether the switching condition is satisfied (S3). At this time, when the push button switch 226 corresponding to the item M16 (specific item) is pressed, the display processor 12 determines that the switching condition has been satisfied (S3: Yes), and the process proceeds to step S4. On the other hand, when the push button switch 226 (specific operator) is not pressed, the display processor 12 determines that the switching condition has not been satisfied (S3: No), and the process proceeds to step S2 where the operation menu M1 is continuously displayed in the normal mode.

In step S4, the display processor 12 displays the operation menu M1 in the specific mode as illustrated in FIG. 6, and displays the second icon M162 in the item M16 (specific item).

In this state, the display processor 12 determines whether the cancel condition is satisfied (S5). At this time, when the push button switch 226 corresponding to the item M16 (specific item) is pressed, the display processor 12 determines that the cancel condition has been satisfied (S5: Yes), and the process proceeds to step S2. On the other hand, when the push button switch 226 (specific operator) is not pressed, the display processor 12 determines that the cancel condition has not been satisfied (S5: No), and the process proceeds to step S4 where the operation menu M1 is continuously displayed in the specific mode.

The control system 1 repeatedly executes the process from step S1 to step S5 described above. However, the flowchart illustrated in FIG. 8 is merely one example, and processing may be appropriately added or omitted, or an order of the processing may be appropriately changed.

### 4. Modifications

Modifications of the first embodiment will be listed below. The modifications described below may be applied in appropriate combination.

The control system 1 in the present disclosure includes a computer system. The computer system has, as main components, at least one processor as hardware and at least one memory. When the processor executes a program stored in the memory of the computer system, a function as the control system 1 in the present disclosure is implemented. The program may be recorded in the memory of the computer system in advance, may be provided through a telecommunication line, or may be provided in a manner to be recorded in a non-transitory recording medium, such as a memory card, an optical disk, or a hard disk drive, each of which is readable by the computer system. Moreover, some or all of the functional sections included in the control system 1 may be configured by an electronic circuit.

The control system 1 may not necessarily be configured such that at least some of the functions of the control system 1 are integrated in a single housing, and the components of the control system 1 may be dispersed in a plurality of housings. On the contrary, the functions that are separately provided in a plurality of devices (for example, the control system 1 and the display device 2) in the first embodiment may be integrated in a single housing. Furthermore, at least some of the functions of the control system 1 may be realized by a cloud (cloud computing) or the like.

Moreover, the display device 2 is not limited to a dedicated device but may be a general-purpose terminal, such as a laptop computer, a tablet terminal, or a smart phone. Furthermore, the display section 23 may not necessarily be configured to directly display a display screen as with a liquid crystal display or an organic EL display, and for example, the display section 23 may be configured to display a display screen by projection as with a projector.

As an information input mode of the operation section 22, a mode other than the push button switch, the touch panel, and the operation dial may be employed. For example, the operation section 22 may employ a form of a keyboard, a pointing device including a mouse, a voice input, a gesture input, an input of an operating signal from another terminal, and the like.

Moreover, the power source of the work machine 3 is not limited to the diesel engine but may be an engine other than the diesel engine, or may be a motor (electric motor) or a hybrid-type power source including an engine and a motor (electric motor), for example.

Furthermore, the switching condition is not limited to a push operation (specific operation) performed on the push button switch 226 (specific operator) corresponding to the item M16. For example, the switching condition may include a specific operation performed on an operation unit other than the operation section 22, such as voice input. The switching condition may include that a person is detected by a person detector included in the display device 2, that the user U1 is positioned in front of the display device 2, that it is determined from a line of sight of the user U1 that the user U1 is gazing at the display screen Dp1, or that an error relating to the work machine 3 occurs, or a combination thereof.

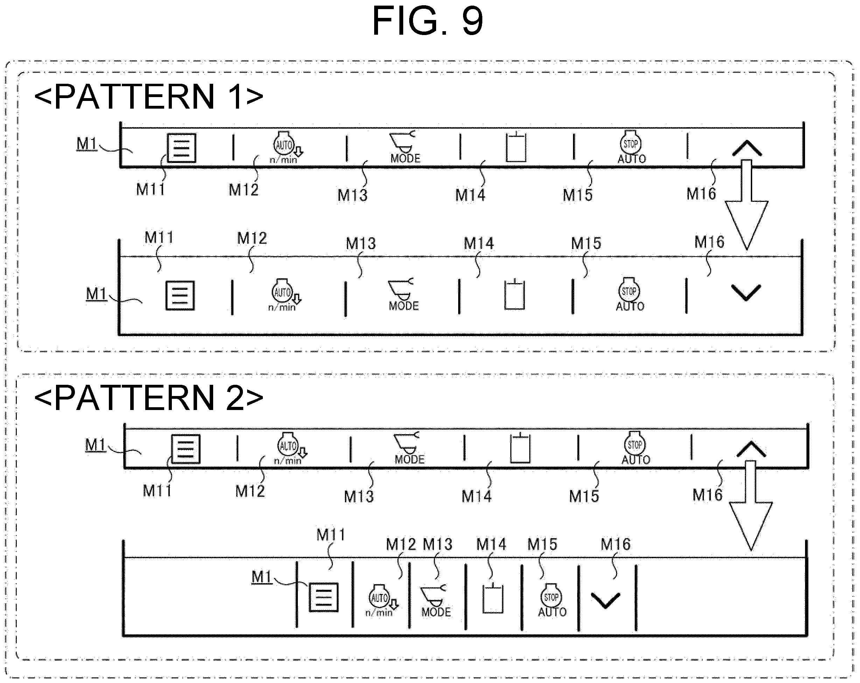

Furthermore, the switching from the normal mode to the specific mode of the display mode of the operation menu M1 is not limited to the example illustrated in the first embodiment, and various patterns are considered. For example, as in "Pattern 1" illustrated in FIG. 9, when the normal mode is switched to the specific mode, the icons, the text, and the like included in the individual items M11 to M16 may be fixed while display sizes of the items M11 to M16 of the operation menu M1 are increased in the vertical direction (up-down direction). Furthermore, as in "Pattern 2" illustrated in FIG. 9, when the normal mode is switched to the specific mode, display sizes of the individual items M11 to M16 may be fixed while display shapes of the items M11 to M16 of the operation menu M1 are changed from a laterally long shape to a vertically long shape. Alternatively, when the normal mode is switched to the specific mode, icons, text, and the like may be added to the items M11 to M16 of the operation menu M1.

### Appendices

A summary of the present disclosure extracted from the above-described embodiments will be described below as appendices. Note that individual configurations and individual processing functions described in the following appendices may be selected, omitted, and combined as appropriate.

### Appendix 1

A work machine control method, comprising:
acquiring operation information on an operation of an operation section of a display device for a work machine;
displaying an operation menu in a position corresponding to the operation section on the display screen displayed in a display section of the display device;
executing control based on the operation information; and
switching a display mode of the operation menu from a normal mode to a specific mode on the display screen when a switching condition is satisfied.

### Appendix 2

The work machine control method according to Appendix 1, wherein
the operation section includes a plurality of switches, and
the operation menu includes a plurality of items corresponding to the plurality of switches.

### Appendix 3

The work machine control method according to Appendix 2, wherein
in a notification region having a length in a direction in which the plurality of items are arranged, running information relating to a running state of the work machine is displayed in the normal mode whereas the operation menu is displayed in the specific mode.

### Appendix 4

The work machine control method according to any one of Appendices 1 to 3, wherein
in the specific mode, a display size of the operation menu is enlarged when at least compared with the normal mode.

### Appendix 5

The work machine control method according to any one of Appendices 1 to 4, wherein
the switching condition includes a specific operation performed on the operation section.

### Appendix 6

The work machine control method according to Appendix 5, wherein
the operation section includes a specific operator for performing the specific operation, and
the operation menu includes a specific item displayed in a position corresponding to the specific operator on the display screen.

### Appendix 7

The work machine control method according to Appendix 6, wherein
the specific item includes a first icon in the normal mode and includes a second icon different from the first icon in the specific mode.

### Appendix 8

The work machine control method according to Appendix 7, wherein
the first icon points an inside of the display screen and the second icon points an outside of the display screen.

### Appendix 9

The work machine control method according to any one of Appendices 1 to 8, further comprising:
switching the display mode of the operation menu from the specific mode to the normal mode on the display screen, when a cancel condition is satisfied.

### Appendix 10

A work machine control program that causes at least one processor to execute the work machine control method according to any one of Appendices 1 to 9.

### REFERENCE SIGNS LIST

1 (Work machine) display control system
2 Display device
3 Work machine
11 Acquisition processor
12 Display processor
13 Control processor
22 Operation section
23 Display section
30 Machine body
221 to 225 Push button switch (switch)
226 Push button switch (specific operator)
Dp1 Display screen
M1 Operation menu
M 11 to M15 Item
M16 Item (specific item)
R11 Notification region
M161 First icon
M162 Second icon

## Claims

1. A work machine control method, comprising:
acquiring operation information on an operation of an operation section of a display device for a work machine;
displaying an operation menu in a position corresponding to the operation section on the display screen displayed in a display section of the display device;
executing control based on the operation information; and
switching a display mode of the operation menu from a normal mode to a specific mode on the display screen when a switching condition is satisfied.

2. The work machine control method according to Claim 1, wherein
the operation section includes a plurality of switches, and
the operation menu includes a plurality of items corresponding to the plurality of switches.

3. The work machine control method according to Claim 2, wherein
in a notification region having a length in a direction in which the plurality of items are arranged, running information relating to a running state of the work machine is displayed in the normal mode whereas the operation menu is displayed in the specific mode.

4. The work machine control method according to any one of Claims 1 to 3, wherein
in the specific mode, a display size of the operation menu is enlarged when at least compared with the normal mode.

5. The work machine control method according to any one of Claims 1 to 3, wherein
the switching condition includes a specific operation being performed on the operation section.

6. The work machine control method according to Claim 5, wherein
the operation section includes a specific operator for performing the specific operation, and
the operation menu includes a specific item displayed in a position corresponding to the specific operator on the display screen.

7. The work machine control method according to Claim 6, wherein
the specific item includes a first icon in the normal mode and includes a second icon different from the first icon in the specific mode.

8. The work machine control method according to Claim 7, wherein
the first icon points an inside of the display screen and the second icon points an outside of the display screen.

9. The work machine control method according to any one of Claims 1 to 3, further comprising:
switching the display mode of the operation menu from the specific mode to the normal mode on the display screen, when a cancel condition is satisfied.

10. A work machine control program that causes at least one processor to execute the work machine control method according to any one of Claims 1 to 3.

11. A work machine control system, comprising:
an acquisition processor that acquires operation information on an operation of an operation section of a display device for a work machine;
a display processor that displays an operation menu in a position corresponding to the operation section on the display screen displayed in a display section of the display device; and
a control processor that executes control based on the operation information, wherein
the display processor switches a display mode of the operation menu from a normal mode to a specific mode on the display screen when a switching condition is satisfied.

12. A work machine comprising:
the work machine control system according to Claim 11; and
a machine body on which the display device is mounted.
